Europäisches Patentamt

European Patent Office

Office européen des brevets

(11) Publication number: **0 510 758 A2**

# EUROPEAN PATENT APPLICATION

(21) Application number: **92201071.5**

(22) Date of filing: **15.04.92**

(51) Int. Cl.5: **G11B 11/10**

(30) Priority: **24.04.91 EP 91200978**
**30.05.91 EP 91201299**

(43) Date of publication of application:
**28.10.92 Bulletin 92/44**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Jacobs, Bernardus Antonius**
**Johannus**
**c/o INT. OCTROOIBUREAU B.V. Prof.**
**Holstlaan 6**
**NL-5656 AA Eindhoven(NL)**
Inventor: **Snijders, Wilfred André Maria**
**c/o INT. OCTROOIBUREAU B.V. Prof.**
**Holstlaan 6**
**NL-5656 AA Eindhoven(NL)**
Inventor: **van Uijen, Cornelis Marinus**
**Johannes**
**c/o INT. OCTROOIBUREAU B.V. Prof.**
**Holstlaan 6**
**NL-5656 AA Eindhoven(NL)**

(74) Representative: **Weening, Cornelis et al**
**INTERNATIONAAL OCTROOIBUREAU B.V.**
**Prof. Holstlaan 6**
**NL-5656 AA Eindhoven(NL)**

(54) **Method of thermomagnetically inscribing and optically reading information.**

(57) A medium which is applicable to air-incident (9) and substrate-incident (10) drives is obtained by building up the magneto-optical recording layer, in a magneto-optical recording medium, of two identical magneto-optical recording layers (4, 6) which are separated by a thin metal layer (5).

FIG.1

The invention relates to a method of thermomagnetically inscribing and optically reading information in a disc-shaped magneto-optical recording medium which comprises a transparent substrate carrying on one side a magneto-optical recording layer having an easy axis of magnetization extending perpendicularly to the plane of the recording layer, a reflection layer and a transparent protective layer, the magneto-optical recording medium being rotated and the recording layer being locally heated by exposure to a write spot which is moved diametrically across the medium and which originates from a laser light beam which is focused on the magneto-optical recording layer.

In a MO (= magneto-optical) recording medium data is represented by magnetized domains or bits. The direction of magnetization of the domains extends perpendicularly to the plane of the MO recording layer. The bits can be detected by means of the MO effect in which the direction of polarization of polarized light changes as a function of the direction of magnetization of the domains when said light is reflected (Kerr-effect) or transmitted (Faraday-effect).

The magnetized domains are obtained by locally heating the MO recording layer to a temperature close to the Curie temperature of the material of the MO recording layer by means of a focused laser light beam. During cooling to a temperature below the Curie temperature, the magnetization is locally oriented according to the direction of an externally applied magnetic field and then frozen. This method is also termed thermomagnetic recording. A customary manner of inscribing information in a MO recording layer consists in rotating a disc-shaped recording medium while a permanent external magnetic field in combination with a laser light beam which is modulated according to the information to be recorded inscribe magnetic domains in the MO recording layer. Another method is that which is commonly referred to as magnetic field modulation (MFM) in which the external magnetic field is modulated according to the information to be recorded and the power of the focused laser light beam is constant or modulated at a constant frequency. The external magnetic field is generated by a magnet coil. An advantage of MFM is that new information can be written over existing information, without said existing information having to be erased first (termed direct overwrite).

Exposure to the focused laser light beam usually takes place *via* the transparent substrate which generally has a thickness of 1.2 mm. In this manner it is precluded that any dust particles or other contaminants present on the surface of the substrate, and/or damage to said substrate, have an adverse effect on the quality of inscribing and reading, because said contaminants are located at a great distance from the focal point of the objective with which the light beam is focused on the MO layers.

Inscribing information *via* the thin transparent protective layer (also termed air-incident) instead of *via* the thick substrate (substrate-incident) has a number of advantages. By virtue of the smaller optical path length, an objective having a higher numerical aperture (N.A.) can be used. A higher N.A. contributes to a higher information density. Secondly, the objective and the magnet coil generating the external magnetic field can be located on the same side (on the side of the protective layer) of the recording medium. In a customary player (drive) for a MO recording medium the objective is located on the side of the substrate, whereas the magnet coil is located on the side of the protective layer. The magnet coil is located on the side of the protective layer to generate a sufficiently large magnetic field at the location of the recording layer, since this field decreases according as the distance between the magnetic field and the recording layer increases. Situating the magnet coil on the side of the substrate would require a relatively large magnet coil owing to the greater distance between the magnet coil and the recording layer. At a given necessary field strength at the location of the recording layer, the arrangement of the magnet coil on the side of the protective layer allows a smaller coil to be used which leads to a reduction of the dissipation and mass of the coil and enables the coil to be operated at higher frequencies (order of magnitude of 10 MHz with MFM). In the customary drive the magnet coil and the objective are coupled to each other *via* a yoke or the magnet coil is positioned relative to the objective *via* a separate actuator. Owing thereto the mass of the write/read head is heavy and, hence, slow and it makes the drive complicated. Consequently, in the case of data drives requiring short access times the air-incident mode has a number of advantages. In principle, a customary MO recording medium can be used in such an air-incident drive, the order of the MO recording layer and the metal reflection layer being reversed.

In European Patent Aplication EP-A-406569, a description is given of a customary MO recording medium. Reversing the order of the MO recording layer and the reflection layer would make the known recording medium suitable for an air-incident drive.

A disadvantage of the thus changed MO recording medium is that such a medium can be read only on an air-incident drive because the metal reflection layer is now situated between the substrate and the MO recording layer. Consequently, the medium cannot be read *via* the substrate. Thus, the known medium is incompatible with substrate-incident drives.

It is an object of the invention to provide, *inter alia*, a method of thermomagnetically recording and optically reading information, in which a MO recording medium can be recorded on an air-incident drive and, subsequently, read on a substrate-incident drive, or conversely.

According to the invention, this object is achieved by a method as described in the opening paragraph, which is characterized in that in the MO recording medium used the magneto-optical recording layer is composed of two identical magneto-optical recording layers which are separated by the reflection layer so that during inscribing information in both magneto-optical recording layers identical information is inscribed which can subsequently be read in reflection *via* the substrate or *via* the protective layer. The MO recording medium used can be inscribed and read *via* both the protective layer and the substrate. Consequently, the MO recording medium is compatible with both types of drives and, for example, can be recorded on an air-incident drive ( = *via* the protective layer) and, subsequently, read on a substrate-incident drive, or conversely. Inscribing and reading *via* the protective layer is possible too, as is inscribing and reading *via* the substrate. Damaged media (as a result of air-incident use), if any, can be read on a substrate-incident drive. After the introduction of air-incident drives with the associated media, said media are compatible with the already existing substrate-incident drives.

Both MO recording layers have a thickness of 15 to 60 nm and, preferably, of approximately 45 nm. Information which is inscribed in one MO recording layer, for example by a laser light beam *via* the transparent protective layer, is also transferred to the other MO recording layer by thermal diffusion *via* the reflection layer and aided by magnetostatic interaction. Both MO recording layers contain identical information so that said information can be read *via* both the substrate and the protective layer. Rare earth transition metal alloys such as GdTbFe and TbFeCo can be used as the material for the MO layers. Also alternating multilayers can be used, for example Co/Pt and Co/Pd.

The reflection layer separating the two MO recording layers consists of, for example, gold, silver or copper and, preferably, of aluminium or an aluminium alloy. A suitable thickness is in the range from 10 to 50 nm and, preferably, approximately 20 nm. Said reflection layer also serves to dissipate heat during the write process so that the medium can also suitably be used at high disc rates (> 10 m/s).

In addition, the MO recording layers can be bounded on the side facing away from the reflection layer by inorganic dielectric layers, commonly referred to as tuning layers, of for example AlN, AlSiN or $Si_3N_4$. Such layers also serve as protective layers for the MO layers.

The transparent substrate is made from, for example, glass, quartz or a transparent synthetic resin such as polycarbonate or polymethyl methacrylate. The surface of the substrate on the side of the MO layers may be provided with an optically scannable groove, a so-called servotrack or guide track, which is mostly spiral-shaped. Said groove may alternatively be provided in a separate synthetic resin layer on the substrate by means of a replication process, which synthetic resin layer consists of, for example, a UV light-cured layer of acrylates. Said previously inscribed information (read-only) in the form of pits is used for sector heading, track numbering and servo information.

The transparent protective layer on the outside of the recording medium is generally a synthetic resin layer of a light or heat curable polymer, for example a UV light-cured acrylate. The thickness of the protective layer is 2 to 40 $\mu$m and preferably approximately 20 $\mu$m.

The linear speed of the MO recording medium is governed by the type of information which is recorded, such as audio, video or data information and is, for example, 1 to 20 m/s. The method according to the invention is particularly suitable for data drives but can also be used for erasable Compact Disc or erasable video-disc systems, *i.e.* the method can be used in all erasable optical disc systems.

It is noted that in the published Japanese Patent Application JP-A-63-37838, a description is given of a MO recording medium which comprises two MO recording layers which are separated by an optically tight aluminium layer having a thickness of 100 nm. The drive described in said Application comprises two mechanically coupled laser light sources for inscribing information in one MO layer and simultaneously erasing information in the other MO layer. Thus, both MO layers contain different information. The aluminium layer must be optically tight to preclude that light from one laser light source reaches the other laser light source or even reaches the second MO layer. Instead of a thin protective layer, said system comprises a thick layer having a thickness of 1.2 mm. Thus, this system cannot be regarded as being air-incident.

In the method according to the invention, both MO recording layers contain identical information which can be read from two sides (air-incident and substrate-incident). The thickness of the reflection layer is selected in such a manner that the inscribed information of the first MO layer is transferred to the second MO layer, even at high disc rates. In the method according to the invention only one laser ligth source is used.

The invention will be explained in greater detail by means of an exemplary embodiment and drawings, in which

Fig. 1 is a diagrammatic cross-sectional view of a MO recording medium as used in the method according to the invention, and

Fig. 2 diagrammatically shows a write/read device for use in the method according to the invention.

## Exemplary embodiment.

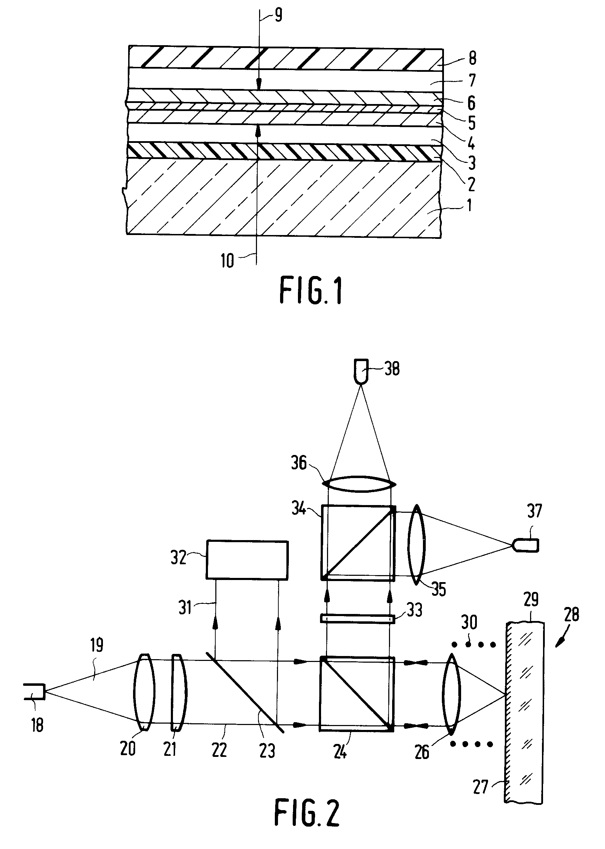

In Fig. 1, reference numeral 1 denotes a glass substrate. The substrate has the shape of a round disc and has a diameter of 12 cm and a thickness of 1.2 mm. The surface of substrate 1 is provided with a layer 2 of a UV light-cured acrylate synthetic resin in which a spiral-shaped groove (not shown) is formed by means of a replication process which is known *per se*. A dielectric AIN layer 3 having a thickness of 80 nm is provided on layer 2 by sputtering. A first MO recording layer 4 having a thickness of 45 nm is provided on layer 3 by sputtering using a GdTbFe sputter target. The layer 4 obtained has the following composition: $Gd_xTb_yFe_z$ (where x = 17; y = 8 and z = 75 at.%). The Curie temperature of this layer is approximately 180°C. An aluminium layer 5 having a thickness of 20 nm is provided on layer 4 by sputtering. An identical second MO recording layer 6 having a thickness of 45 nm is provided on layer 5 by sputtering. A dielectric AIN layer 7 having a thickness of 80 nm is applied to layer 6 by sputtering. Layer 7 is covered by a UV-cured acrylate protective layer 8 having a thickness of 20 $\mu$m. Information is inscribed in MO layer 6 by means of a laser light beam which is pulsed at a constant frequency, indicated by arrow 9, and which is focused (air-incident mode) on the MO layer 6 *via* the protective layer 8 and the AIN layer 7. The laser light issues from an AlGaAs laser having an emission wavelength of approximately 800 nm. During exposure an external magnetic field is applied the orientation of which is opposite to the direction of magnetization of MO layer 6. In the areas of MO layer 6 which are exposed and, thus, heated to the Curie temperature, reversal of the direction of magnetization takes place. As a result of heat transfer *via* the aluminium layer 5, corresponding areas of MO layer 4 are also heated to the Curie temperature so that also in said layer 4 reversal of the direction of magnetization takes place. Identical information is formed both in MO layer 6 and MO layer 4. The information bits thus obtained have a diametral dimension of approximately 1 $\mu$m. The information bits are read by means of weak, linearly polarized laser light. On reflection against an information bit, rotation of the plane of polarization takes place (Kerr rotation) which is measured by a detector. By reflection against the aluminium layer 5 also the Faraday rotation generated by the MO layer is added to the Kerr rotation. The information can be read *via* both the transparent protective layer 8 (air-incident, arrow 9) and *via* the substrate 1 (substrate-incident, arrow 10). The information bits can be erased by an external magnetic field the orientation of which is opposite to the direction of magnetization of the information bit.

In Fig. 2, reference numeral 18 denotes an AlGaAs laser which produces a pulsed light beam 19 having a wavelength of 800 nm. Said light beam 19 passes through a collimator lens 20 having a numerical aperture (NA) of 0.3 and becomes parallel. The astigmatism of the parallel laser beam is corrected when the beam passes through a cylindrical lens 21. The parallel beam 22 subsequently passes through a partially transmitting mirror 23 and a neutral splitting cube 24 and is then focused on the MO recording layer 27 of the rotating MO recording medium 28 by means of an objective 26 having a numerical aperture (NA) of 0.6. The MO recording layer is composed of two identical MO recording layers which are separated by an aluminium layer, as shown in Fig. 1. The glass substrate 29 faces away from the objective. Exposure of the recording layer takes place in the air-incident mode. In the exposed areas, light absorption causes a temperature increase to approximately the Curie temperature. The use of a magnetic field having a strength of $2 \times 10^4$ A/m and which is generated by coil 30, causes the direction of magnetization of the recording layer to be rotated through 180° in an exposed area. The magnet coil 30 and the objective 26 are both located on the same side of the MO recording medium 28.

The information inscribed is read by means of a low-energy continuous light beam issuing from the AlGaAs laser 18 which follows the same light path as described above. On reflection of the light beam against an information bit of the recording layer 27, the locally changed direction of magnetization causes the plane of polarization to be rotated through an angle $\theta_k$ (Kerr rotation). The reflected light beam again passes through objective 26 and neutral splitting cube 24. After reflection against the partially transmitting mirror 23, resulting beam 31 is fed to control device 32 for positioning and focusing the laser light beam on the recording layer 27. A part of the light beam is reflected by the neutral splitting cube 24. Said reflected light then passes through a 1/2λ-plate 33 the main axis of which encloses an angle of 22.5° with the original direction of polarization. This leads to a polarization rotation of 45° with a modulation of $\pm\theta_k$. A polarization splitting cube 34 divides the light into a parallel and a perpendicular component having substantially the same intensity which are detected by diodes 37 and 38 *via* lenses 35 and 36, respectively. In this process, the angle modulation $\pm\theta_k$ is converted to amplitude fluctuations at diodes 37 and 38. Since said diodes are in phase opposition, the signal difference between the diodes forms a sensitive read signal.

If required, the MO recording medium 28 can also be read on a conventional substrate-incident drive. In that case, the laser light beam reaches the MO recording layer *via* the substrate 29.

## Claims

**1.** A method of thermomagnetically inscribing and optically reading information in a disc-shaped magneto-optical recording medium which comprises a transparent substrate carrying on one side a magneto-optical recording layer having an easy axis of magnetization extending perpendicularly to the plane of the recording layer, a reflection layer and a transparent protective layer, the magneto-optical recording medium being rotated and the recording layer being locally heated by exposure to a write spot which is moved diametrically across the medium and which issues from a laser light beam which is focused on the magneto-optical recording layer, characterized in that the magneto-optical recording layer is composed of two identical magneto-optical recording layers which are separated by the reflection layer so that during inscribing information in both magneto-optical recording layers, identical information is inscribed which can subsequently be read in reflection *via* the substrate or *via* the protective layer.

**2.** A method as claimed in Claim 1, characterized in that the recording medium is inscribed and read *via* the transparent protective layer.

**3.** A method as claimed in Claim 1, characterized in that the recording medium is inscribed *via* the substrate and read *via* the transparent protective layer. 4.A method as claimed in Claim 1, characterized in that the recording medium is inscribed and read *via* the substrate.

**5.** A method as claimed in Claim 1, characterized in that the recording medium is inscribed *via* the transparent protective layer and read *via* the substrate. 6.A method as claimed in Claim 1, characterized in that an aluminium reflection layer having a thickness of 10-50 nm is used.

FIG.1

FIG.2